# EUROPEAN PATENT SPECIFICATION

(11) **EP 0 394 485 B1**
(45) Date of publication and mention of the grant of the patent: **25.05.1994**
(21) Application number: 89911601.6
(22) Date of filing: 23.10.1989
(51) Int. Cl.: B25J 17/02, B25J 19/00

(54) **WRIST STRUCTURE FOR INDUSTRIAL ROBOTS**
GELENKSTRUKTUR FÜR INDUSTRIELLEN ROBOTER
STRUCTURE DE POIGNET POUR ROBOT INDUSTRIEL

(30) Priority: 24.10.1988 JP 266222/88
(43) Date of publication of application: 31.10.1990
(73) Proprietor: FANUC LTD., Minamitsuru-gun, Yamanashi 401-05 (JP)
(72) Inventor: TORII, Nobutoshi, Hachioji-shi Tokyo 192 (JP); MIZUNO, Hitoshi Fanuc Mansion Harimomi 8-310, Minamitsuru-gun Yamanashi 401-05 (JP); IWASAKI, Kyozi Fanuc Mansion Harimomi 8-209, Minamitsuru-gun Yamanashi 401-05 (JP)
(74) Representative: Jackson, Peter Arthur
(86) International application number: JP8901084
(87) International publication number: WO9004499

(56) References cited:
- EP-A- 0 068 769
- JP-A-61 297 093
- JP-U-58 136 289
- US-A- 4 459 898
- US-A- 4 656 329
- US-A- 4 767 257

## Description

The present invention relates to a wrist mechanism of a three-axis wrist for an industrial robot which carries out work in which a fluid is used, such as the application of an adhesive and a sealant.

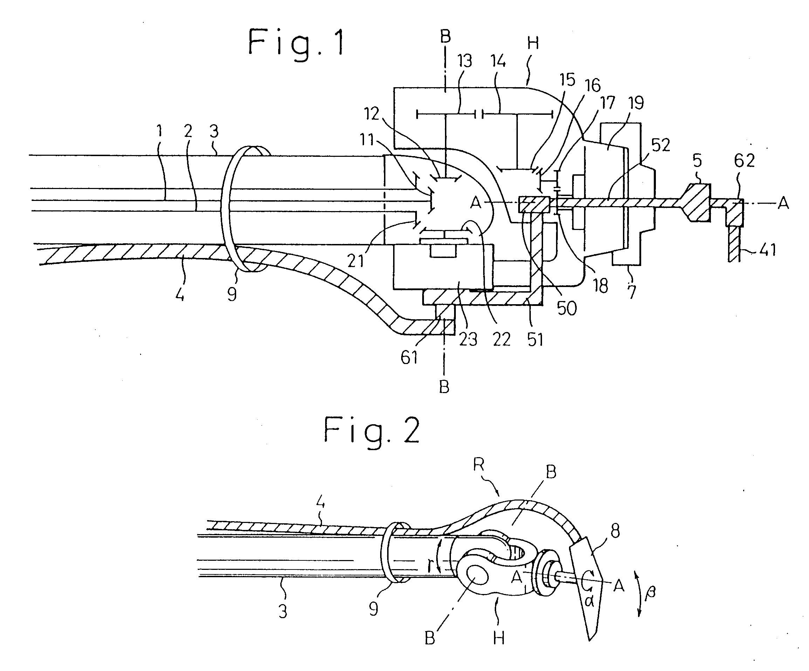

Figure. 2 is a perspective view of a wrist unit employed in a conventional sealing robot. As shown in Fig. 2, a liquid material is supplied through a hose 4 to a sealing gun 8 held on an extremity of the wrist unit. The hose 4 is extended along the outer surface of a U arm 3, and a portion of the hose 4 near the wrist unit is bound to the U arm with a tape with a large slack zone R formed near the wrist unit so that the hose 4 can flex in accordance with the motion of the wrist unit.

While the robot is in operation, a wrist H executes a γ-rotation about the axis of the U arm 3 and a β-swing about an axis B-B, and the sealing gun 8 executes an α-rotation about an axis A-A to apply a sealant.

Accordingly, the hose is torn, creased and damaged because the portion of the hose near the extremity of the wrist unit is undulated. Also, since the large slack zone R is formed in the hose, to enable the hose to flex in accordance with the motion of the wrist unit about three axes, i.e., the α-axis, β-axis and γ-axis, the motion of the wrist unit is subject to spatial restrictions, to avoid interference between the hose and peripheral equipment, and such an arrangement is undesirable from the viewpoint of safety control.

EP-A-68769 discloses a wrist mechanism for an industrial robot, the mechanism comprising a first pipe extending along a first axis, about which an end of the wrist mechanism is rotatable, and through the center of a reduction gear positioned to rotate the forward end of the wrist about the first axis; and a first universal pipe coupling; and according to the present invention, such a mechanism is characterised in that the first universal pipe coupling is provided on a second axis about which the wrist is rotatable to rotate in series with the rotation about the first axis; and by a second pipe having one end connected to the first pipe and the other end connected to the first universal pipe coupling; a hose extending along an arm and connected through the first universal pipe coupling to the pipe; and a connecting hose connected to the extremity of the pipe.

Since the universal pipe coupling is provided on the second axis, the hose and the pipe are under no strain. Further, since the pipe extends along the first axis, the pipe is under no strain when the wrist unit turns about the first axis

Since the pressure piping for the user is provided within the wrist unit, the hose is not undulated during the operation of the wrist unit, and thus tearing, creasing and damaging of the hose are prevented.

Furthermore, since the hose need not be provided with a large amount of slack R (Fig. 2) at the portion thereof near to the wrist unit, the possibility of interference of the hose with peripheral equipment and the operator is reduced.

Preferably the arm is rotatable about a third axis which is its longitudinal axis, and the connecting hose is connected through a second universal pipe coupling to the pipe.

If the arm turns about the third axis, the portion of the hose 4 near the wrist unit is not affected by this rotation.

In the accompanying drawings:-
Figure 1 is an explanatory view of a robot wrist unit embodying the present invention; and
Figure 2 is a perspective view of a conventional robot wrist unit.

As shown in Fig. 1, a three-axis wrist driving mechanism is constructed by extending an α-drive shaft 1 within a U arm 3 and coaxially therewith, extending a hollow β-drive shaft 2 coaxially with the α-drive shaft 1 to receive the latter therein, interlocking the α-drive shaft 1 with an α-axis reduction gear 19 provided on the free end of a wrist through a first bevel gear train including a bevel gear 11 attached to the front end of the α-drive shaft 1 and a bevel gear 12 meshed with the bevel gear 11, a first spur gear train including spur gears 13 and 14, a second bevel gear train including bevel gears 15 and 16 and a second spur gear train including spur gears 17 and 18, interlocking the β-drive shaft 2 with a β-axis reduction gear 23 provided on one side of the wrist through a bevel gear train including bevel gears 21 and 22, and supporting the rear end of the U arm on a support for the γ-axis turning motion.

A metallic pipe 52 is extended on the axis A-A of the α-turning motion through the respective centers of the α-axis reduction gear 19, an α-axis flange 7 connected to the α-axis reduction gear 19 to hold a sealing gun, not shown, and the spur gear 18, i.e., the input gear of the α-axis reduction gear. A pressure-tight universal pipe coupling 61 is attached to the outer surface of the side wall of a wrist H, on an axis B-B. A metallic pipe 51 has one end joined to the pressure-tight universal coupling 61 and the other end joined to a coupling 50 joined to the inner end of the pipe 52. The free end of a hose 4 connected to a material source, not shown, is connected to the universal pipe coupling 61. A connecting hose 41 has one end connected to a pressure-tight universal pipe coupling 62 attached to a flange 5 joined to the outer end of the pipe 52, and the other end connected to the sealing gun, not shown, attached to the α-axis flange 7.

The extremity of the hose 4 is bound to the U arm 3 with a tape 9.

In a wrist mechanism thus constructed, the universal pipe coupling 61 turns for a β-axis swing motion, the pipe 52 is not displaced during the α-axis turning motion because the pipe 52 is extended on the axis of α-axis turning motion, the universal pipe coupling 62 turns for the α-axis turning motion of the sealing gun mounted on the α-axis flange 7, to enable the connecting hose 51 to follow the movement of the sealing gun, and the U arm turns on its rear end for the γ-axis turning motion of the wrist. Thus, the extremity of the hose 4 is not displaced for the three-axis operation of the wrist unit.

Although the universal pipe coupling 61 is disposed on the outer surface of the wall of the wrist in this embodiment, to facilitate the connection and disconnection of the hose and the universal pipe coupling 61, the universal pipe coupling 61 may be disposed at any suitable position for the same purpose provided that the universal pipe coupling 61 is coaxial with the axis B-B of β-axis swing motion.

Furthermore, the hose is not subject to displacement attributable to the α-axis turning motion and β-axis swing motion, and is able to move comparatively easily in the γ-axis turning motion.

### REFERENCE NUMERALS

- 1: α-drive shaft
- 2: β-drive shaft
- 3: U arm
- 4: hose
- 5: flange
- 7: α-axis flange
- 11, 12, 15, 16, 21, 22: bevel gear
- 13, 14, 17, 18: spur gear
- 19: α-axis reduction gear
- 23: β-axis reduction gear
- 41: connecting hose
- 50: coupling
- 51, 52: pipe
- 61, 62: universal pipe coupling

## Claims

1. A wrist mechanism for an industrial robot, the mechanism comprising a first pipe (52) extending along a first axis (A-A), about which an end of the wrist mechanism is rotatable, and through the center of a reduction gear positioned to rotate the forward end of the wrist about the first axis; and a first universal pipe coupling (61); characterised in that the first universal pipe coupling (61) is provided on a second axis about which the wrist is rotatable to rotate in series with the rotation about the first axis; and by a second pipe (51) having one end connected to the first pipe (52) and the other end connected to the first universal pipe coupling (61); a hose (4) extending along an arm (3) and connected through the first universal pipe coupling (61) to the pipe (51); and a connecting hose (41) connected to the extremity of the pipe (52).

2. A wrist mechanism, according to claim 1, wherein the arm is rotatable about a third axis which is its longitudinal axis, and the connecting hose (41) is connected through a second universal pipe coupling (62) to the pipe (52).

## Patentansprüche

1. Gelenkmechanismus für einen Industrieroboter, welcher umfaßt: ein erstes Rohr (52), welches sich längs einer ersten Achse (A-A) erstreckt, um den ein Ende des Gelenkmechanismus drehbar ist und welches sich durch die Mitte eines Reduziergetriebes erstreckt, welches vorgesehen ist, um das vordere Ende des Gelenkes um eine erste Achse zu drehen; und eine erste Universal-Rohrkupplung (61); und gemäß der vorliegenden Erfindung ist ein solcher Mechanismus dadurch gekennzeichnet, daß die erste Universal-Rohrkupplung (61) auf einer zweiten Achse vorgesehen ist, um die das Gelenk schwenkbar ist, um eine der Drehung um die erste Achse überlagerte Schwenkbewegung auszuführen, und daß ein zweites Rohr (51) vorgesehen ist, dessen eines Ende mit dem ersten Rohr (52) verbunden ist und deren anderes Ende mit der ersten Universal-Rohrkupplung (61) verbunden ist, wobei sich ein Schlauch (4) längs eines Arms (3) erstreckt und über die erste Universal-Rohrkupplung (61) mit dem Rohr (51) verbunden ist und wobei ein Verbindungsschlauch (41) mit dem äußeren Ende des Rohrs (52) verbunden ist.

2. Gelenkmechanismus nach Anspruch 1, bei dem der Arm um eine dritte Achse drehbar ist, welche seine Längsachse ist, und bei dem der Verbindungsschlauch (41) über eine zweite Universal-Rohrkupplung (62) mit dem (ersten) Rohr (52) verbunden ist.

## Revendications

1. Mécanisme à articulation pour robot industriel, comprenant un premier tube (52) s'étendant le long d'un premier axe (A-A), autour duquel pivote une extrémité du mécanisme à articulation, et à travers le centre d'un réducteur positionné de manière à entraîner en rotation l'extrémité avant de l'articulation autour du premier axe; et un premier raccord universel (61); caractérisé en ce que le premier raccord universel (61) est monté sur un deuxième axe autour duquel l'articulation peut pivoter en série avec la rotation autour du premier axe; et par un deuxième tube (51) ayant une extrémité raccordée au premier tube (52) et l'autre extrémité raccordée au premier raccord universel (61); un tuyau flexible (4) s'étendant le long d'un bras (3) et raccordé au tube (51) par l'intermédiaire du premier raccord universel (61); et un tuyau flexible de liaison (41) branché à l'extrémité du tube (52).

2. Mécanisme à articulation, selon la revendication 1, dans lequel le bras pivote autour d'un troisième axe qui est son axe longitudinal, et le tuyau flexible de liaison (41) est raccordé au tube (52) par l'intermédiaire d'un deuxième raccord universel (62).
